(19) **Europäisches Patentamt / European Patent Office / Office européen des brevets**

(11) **EP 1 461 650 B1**

(12) # FASCICULE DE BREVET EUROPEEN

(45) Date de publication et mention de la délivrance du brevet:
**21.01.2009 Bulletin 2009/04**

(21) Numéro de dépôt: **02796855.1**

(22) Date de dépôt: **21.11.2002**

(51) Int Cl.:
***G02B 6/122*** *(2006.01)*

(86) Numéro de dépôt international:
**PCT/FR2002/003993**

(87) Numéro de publication internationale:
**WO 2003/044579 (30.05.2003 Gazette 2003/22)**

(54) **STRUCTURE A CRISTAL PHOTONIQUE POUR LA CONVERSION DE MODE**

PHOTONISCHE KRISTALLSTRUKTUR ZUR MODENUMWANDLUNG

PHOTONIC CRYSTAL STRUCTURE FOR MODE CONVERSION

(84) Etats contractants désignés:
**AT BE BG CH CY CZ DE DK EE ES FI FR GB GR IE IT LI LU MC NL PT SE SK TR**

(30) Priorité: **21.11.2001 FR 0115057**

(43) Date de publication de la demande:
**29.09.2004 Bulletin 2004/40**

(73) Titulaire: **CENTRE NATIONAL DE LA RECHERCHE SCIENTIFIQUE (CNRS) 75794 Paris Cedex 16 (FR)**

(72) Inventeurs:
• **TALNEAU, Anne, Juliette F-91120 Palaiseau (FR)**
• **LALANNE, Philippe F-91120 Palaiseau (FR)**

(74) Mandataire: **Breese, Pierre BREDEMA 38, avenue de l'Opéra 75002 Paris (FR)**

(56) Documents cités:
**WO-A-98/53351**

• **PALAMARU M ET AL: "PHOTONIC CRYSTAL WAVEGUIDES: OUT-OF-PLANE LOSSES AND ADIABATIC MODAL CONVERSION" APPLIED PHYSICS LETTERS, AMERICAN INSTITUTE OF PHYSICS. NEW YORK, US, vol. 78, no. 11, 12 mars 2001 (2001-03-12), pages 1466-1468, XP001015015 ISSN: 0003-6951**
• **HAPP, T., KAMP, M., FORCHEL, A.: "Photonic crystal tapers for ultracompact mode conversion" OPTICS LETTERS, vol. 26, no. 14, 15 juillet 2001 (2001-07-15), pages 1102-1104, XP002211508**
• **XU Y ET AL: "ADIABATIC COUPLING BETWEEN CONVENTIONAL DIELECTRIC WAVEGUIDES AND WAVEGUIDES WITH DISCRETE TRANSLATIONAL SYMMETRY" OPTICS LETTERS, OPTICAL SOCIETY OF AMERICA, WASHINGTON, US, vol. 25, no. 10, 15 juin 2000 (2000-06-15), pages 755-757, XP000951931 ISSN: 0146-9592**

**Description**

Domaine technique et art antérieur

La présente invention concerne une structure à cristal photonique pour la conversion de mode.

L'invention s'applique dans le domaine de l'optique intégrée.

Selon l'art connu, un convertisseur ou transformateur de mode a pour fonction de transformer un premier mode optique qui se propage dans une première structure de propagation guidée en un deuxième mode optique apte à se propager dans une deuxième structure de propagation guidée. Les deux structures de propagation guidée peuvent soit faire partie d'un même circuit intégré photonique, soit faire partie de deux circuits séparés. Une structure de propagation guidée peut être, par exemple, une fibre optique.

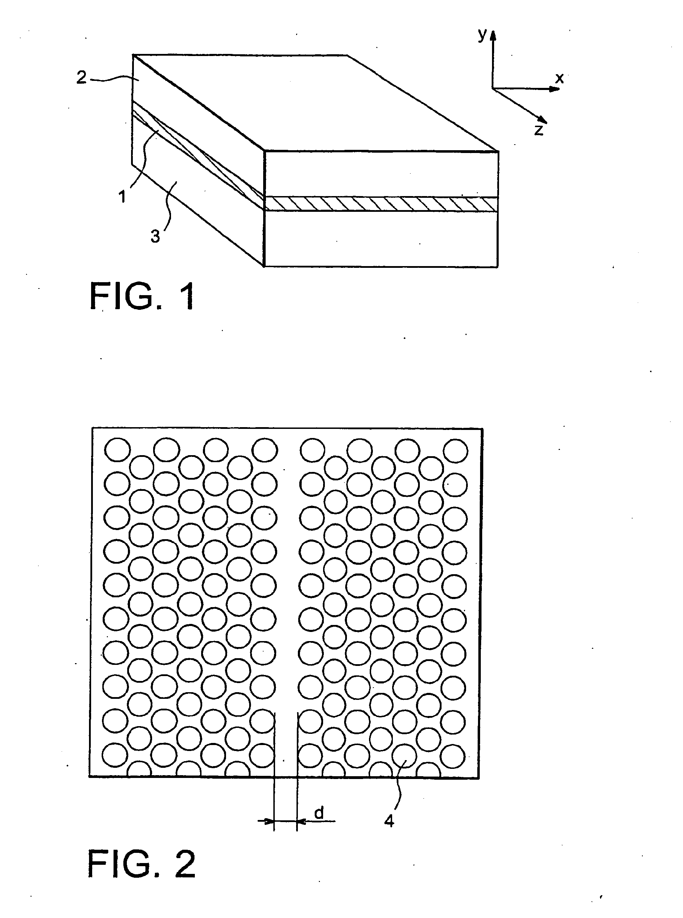

La figure 1 représente une structure de propagation guidée à confinement vertical selon l'art connu. La lumière se propage dans la direction z. Dans la direction verticale y, la lumière est confinée dans une couche 1 de matériau de fort indice n1 prise en sandwich entre deux couches de matériau d'indices plus faibles n2 et n3. Dans la direction latérale x, la lumière est confinée dans le milieu d'indice n1 soit par une charge du matériau (ruban chargé) soit par un autre matériau (ruban gravé), cet autre matériau pouvant être de l'air. Les matériaux d'indices n1, n2, n3 peuvent être des matériaux semi-conducteurs, diélectriques ou métalliques. La taille et la forme du ou des modes de propagation supportés par la structure représentée en figure 1 dépendent de la géométrie de la structure et de la valeur des indices n1, n2, n3.

Une autre structure de propagation est représentée en figure 2. La figure 2 est une vue de dessus d'une structure de propagation à cristal photonique.

La structure à cristal photonique est constituée d'un ensemble de motifs 4 alignés. Les motifs 4 peuvent être, par exemple, des trous gravés dans un matériau ou encore des piliers rassemblés les uns à côté des autres. Dans le cadre d'une application à une dimension, les motifs peuvent être des tranchées parallèles gravées dans le matériau.

Différents types de guides de propagation peuvent être réalisés dans une structure à cristal photonique. Un premier type de guide est constitué d'une structure à cristal photonique dans laquelle n rangées de motifs voisines sont absentes. Dans la suite de la description, ce premier type de guide sera nommé « guide Wn ». A titre d'exemple non limitatif, la figure 2 représente une structure dans laquelle une seule rangée de motifs est absente. Le guide est alors un guide W1. La propagation de l'onde s'appuie sur la zone dépourvue de motifs (zone de largeur d sur la figure 2). D'autres types de guide sont également connus tels que, par exemple, les structures à cristal photonique dans lesquelles la zone dépourvue de rangées de motifs ne correspond pas à l'absence d'un nombre entier de rangées mais à l'absence d'un nombre non entier de rangées (guides Wn avec n réel) ou encore, les structures à cristal photoniques dans lesquelles sont réalisés des motifs de forme et/ou de taille différentes, par exemple des trous de dimensions différentes.

Une structure de propagation guidée est optimisée pour assurer au mieux une fonction donnée. C'est la géométrie de la structure qui fixe le ou les mode(s) de propagation. Une conversion de mode est très souvent nécessaire pour passer d'une première structure de propagation assurant une première fonction à une deuxième structure de propagation assurant une autre fonction. Idéalement, la conversion de mode permet de coupler la quasi-totalité de la lumière qui sort de la première structure dans la deuxième structure, de rendre négligeable la réflexion et les pertes par diffusion de l'onde à l'interface entre les structures et de considérablement relâcher les tolérances d'alignement entre les fonctions, lequel alignement représente souvent un important coût de fabrication.

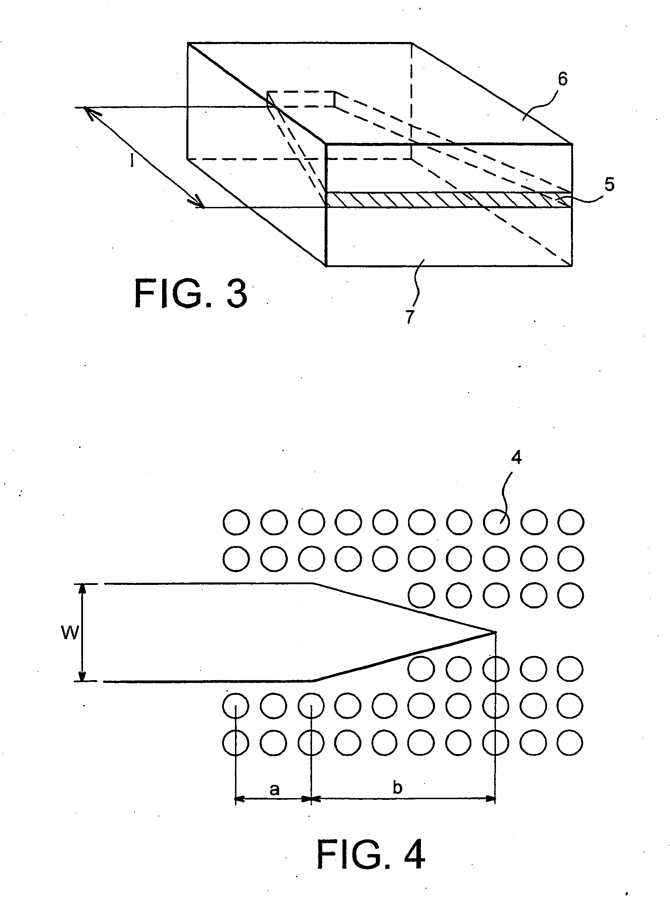

Des exemples de convertisseurs de mode selon l'art connu sont représentés aux figures 3, 4 et 5.

Le convertisseur de mode représenté en figure 3 est divulgué dans le document intitulé « *Spot Size Converter for Low Cost PICs* » (K.D.Mesel, I.Moerman, R.Baets, B.Dhoedt, P.Vandaele and J.Stulemeijer, ECIO'99, ThC2).

Le convertisseur de la figure 3 est un convertisseur de type latéral. Un milieu 5 d'indice n1 est pris en sandwich entre deux milieux 6 et 7 d'indices respectifs n2 et n3. La conversion de mode est réalisée par l'élargissement continu du milieu 5 selon la direction de propagation de l'onde. L'élargissement du milieu de propagation qui permet de passer d'un premier à un deuxième mode de propagation doit se faire sur une distance suffisamment longue pour obtenir de bonnes performances. A titre d'exemple, la distance 1 sur laquelle l'élargissement est effectué peut être comprise entre 100 $\mu$m à 200 $\mu$m. La plage des longueurs d'onde concernées est alors celle du proche Infrarouge (longueurs d'onde comprises entre 0,8 $\mu$m et 2 $\mu$m).

Un deuxième exemple de convertisseur de mode selon l'art connu est représenté en figure 4. Ce deuxième exemple de convertisseur est divulgué dans le document intitulé « Tapered Couplers for Efficient Interfacing Between Dielectric and Photonic Crystal Waveguides » (Attila Mekis et J.D.Joannopoulos ; Journal of Lightwave Technology, vol.19, No.6, June 2001) .

Le convertisseur de la figure 4 permet de passer d'un mode de propagation en guide diélectrique de type ruban à un mode de propagation en guide à cristal photonique. Le guide ruban de largeur W pénètre dans la structure à cristal photonique sur une distance a puis se rétrécit en pointe sur une distance b.

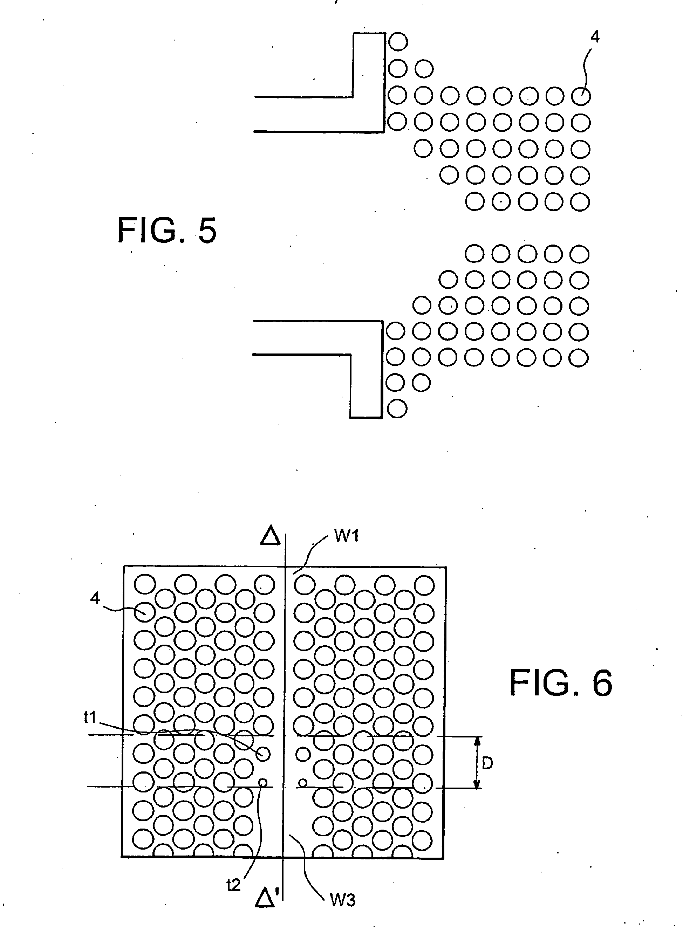

Un troisième exemple de convertisseur de mode selon l'art connu est représenté en figure 5. Ce troisième exemple de convertisseur est divulgué dans le document intitulé « Observation of light propagation in two-dimensional photonic crystal-based bent optical waveguides » (S.Yamada et al.; Journal of Applied Physics, vol.89, N°2, 15 January 2001).

Le convertisseur de la figure 5 permet une transition entre un guide d'onde bidimensionnel et un guide à cristal photonique. La transition est ici assurée par la forme en entonnoir de la région dépourvue de motifs du guide à cristal photonique. Une bonne adaptation n'est possible que si la région en forme d'entonnoir est suffisamment longue.

D'une façon générale, il apparaît que les convertisseurs de mode selon l'art connu nécessitent d'être réalisés sur des distances suffisamment grandes dans le sens de propagation de l'onde pour pouvoir fonctionner correctement. Ces grandes distances présentent des inconvénients. Elles sont en effet préjudiciables pour la réalisation des circuits, en particulier ceux devant atteindre de bonnes performances dynamiques. Par exemple, pour moduler directement un laser à 10 Gb/s, il est préférable que sa longueur ne soit pas supérieure à 100 $\mu$m. Il n'est donc pas possible d'équiper un tel laser avec un convertisseur de mode selon l'art connu. Par ailleurs, une quantité non négligeable de matériau est nécessaire pour la réalisation de ces convertisseurs, ce qui conduit à augmenter très sensiblement les dimensions et donc le coût des composants.

La publication « Photonic crystal waveguides : out-of-plane losses and adiabatic modal conversion », Palamaru et al., Applied Physics Letters, Volume 78, Numéro 11, enseigne une structure de propagation guidée à cristal photonique permettant de réaliser des conversions de mode.

Dans cette publication, une conversion de mode adiabatique est réalisée entre un guide d'onde d'un cristal photonique et un guide d'onde conventionnel grâce à une zone intermédiaire comprenant des motifs gravés dont la taille varie progressivement.

Cette publication ne décrit pas de conversion de modes entre deux guides d'onde dans le cristal photonique lui-même.

L'invention ne présente pas les inconvénients mentionnés ci-dessus.

Exposé de l'invention

L'invention concerne une structure de propagation guidée à cristal photonique selon la revendication 1. Des modes de realisation de l'invention sont definis dans les revendications dependantes.

Un convertisseur de mode selon l'invention comprend donc au moins une série de motifs de taille progressivement variable entre deux guides d'onde. Avantageusement, cette structure a une longueur finie D de petite dimensions (typiquement quelques longueurs d'onde). La variation progressive de la taille des motifs permet un passage progressif entre les deux guides d'onde. Ce passage progressif opère une conversion de mode (conversion progressive d'un mode de propagation qui se propage dans le premier guide en un mode de propagation qui se propage dans le deuxième guide).

L'invention s'appuie sur le principe physique selon lequel, lorsqu'une onde électromagnétique de longueur d'onde légèrement plus grande que la dimension caractéristique d'une structure interagit avec cette structure, cette onde ne se diffracte pas au sens usuel du terme. Tout se passe comme si l'onde se propageait dans un matériau continu, communément appelé matériau artificiel, dont l'indice dépend, en premier lieu, de la quantité de matériau gravé. L'onde électromagnétique ne voit pas le détail des motifs gravés qui constituent la structure. Elle n'est alors sensible qu'à une moyenne locale.

La structure de propagation selon l'invention permet avantageusement de réaliser des transitions optiques courtes et à très faibles pertes.

Brève description des figures

D'autres caractéristiques et avantages de l'invention apparaîtront à la lecture d'un mode de réalisation préférentiel de l'invention fait en référence aux figures jointes parmi lesquelles :

- la figure 1 représente une première structure de propagation guidée selon l'art connu,
- la figure 2 représente une deuxième structure de propagation guidée selon l'art connu,
- la figure 3 représente un premier exemple de convertisseur de mode selon l'art connu,
- la figure 4 représente un deuxième exemple de convertisseur de mode selon l'art connu,
- la figure 5 représente un troisième exemple de convertisseur de mode selon l'art connu,
- la figure 6 représente un premier exemple de convertisseur de mode selon l'invention,
- la figure 7 représente une première application d'un convertisseur de mode selon l'invention,
- les figures 8A et 8B représentent, à titré d'exemples, des circuits de principe permettant d'illustrer les performances d'un convertisseur de mode selon l'invention,
- la figure 9 représente une photographie d'un - convertisseur de mode selon l'invention,
- la figure 10 représente une deuxième application d'un convertisseur de mode selon l'invention,
- la figure 11 représente un deuxième exemple de convertisseur de mode selon l'invention,
- la figure 12 représente un troisième exemple de convertisseur de mode selon l'invention,

Sur toutes les figures, les mêmes références désignant les mêmes éléments.

Dans la suite de la description, la plupart des structures de propagation guidée selon l'invention sont des convertisseurs de mode qui permettent de passer d'un guide Wn à un guide wm, n≠m, n et m étant des nombres entiers. L'invention concerne également des structures à cristal photonique qui permettent de passer d'un premier guide quelconque à un deuxième guide quelconque. Les premier et deuxième guides peuvent alors être non seulement des guides Wn, n entier, mais également, par exemple, des structures à cristal photonique dans lesquelles la zone dépourvue de rangées de motifs correspond à un nombre non entier de rangées (guides Wn avec n réel), des structures à cristal photonique dans lesquelles c'est la taille des trous et non leur absence qui crée à zone de guidage, ou encore des guides ruban.

Description détaillée de modes de mise en oeuvre de l'invention

Les figures 1, 2, 3, 4 et 5 ont été décrites précédemment, il est donc inutile d'y revenir.

La figure 6 représente une vue de dessus d'un premier exemple de convertisseur de mode selon l'invention. Le convertisseur de mode est réalisé dans une structure à cristal photonique constituée d'un ensemble de motifs 4. Les motifs 4 sont, par exemple, des trous d'air obtenus par gravure d'un matériau semi-conducteur. Le confinement vertical de l'onde qui se propage est assuré par une couche de fort indice (GaInAsP) d'épaisseur, par exemple, égale à 500 nm située entre deux couches de matériau d'indice plus faible (InP). Les trous d'air sont placés dans le sens de la propagation de l'onde et définissent, par exemple, un réseau triangulaire dont la maille est égale à 450 nm. Le diamètre des trous peut être égal, par exemple, à 300 nm et la profondeur à 1 μm. Une gravure isotrope, par exemple une gravure sèche par plasma, est utilisée pour réaliser les trous. Le convertisseur opère la conversion d'un mode de guide W1 en un mode de guide W3 et réciproquement.

La partie de guide W1 est caractérisée par l'absence d'une rangée de trous dans la structure à cristal photonique et la partie de guide W3 est caractérisée par l'absence de trois rangées de trous dans cette même structure. Les parties de guide W1 et W3 sont naturellement alignées selon un même axe ΔΔ'. La transition de la partie de guide W1 à la partie de guide W3 s'effectue par interruption, avec diminution de diamètre, des trous des deux rangées qui définissent la partie de guide W1. Comme cela est représenté sur la figure 6, deux trous t1, t2 peuvent suffire pour assurer la transition sur une rangée. A titre d'exemple non limitatif, pour un diamètre de trou de la structure à cristal photonique de 300 nm comme mentionné ci-dessus, les trous t1 et t2 ont des diamètres respectifs de 200 nm et 100 nm. Avantageusement, la distance D sur laquelle les trous voient leur diamètre diminuer est relativement faible. Dans le cas de l'exemple ci-dessus, la distance D vaut, par exemple, environ 700 nm. Les trous de plus petits diamètres peuvent ou non être gravés moins profondément que les trous de plus grands diamètres.

Préférentiellement, les trous sont fabriqués sur une grille régulière qui est la grille du cristal photonique.

C'est alors pendant l'étape de lithographie électronique, qui permet de définir le cristal photonique que les diamètres des trous sont ajustés. Il faut toutefois noter que l'utilisation de la grille régulière du cristal photonique pour fabriquer le matériau artificiel n'est qu'une commodité de fabrication. Les trous peuvent également être positionnés sur des emplacements différents, leur dimension et leur profondeur étant alors ajustées en conséquence. Le positionnement des trous peut alors ne pas être périodique.

Selon le mode de réalisation de l'invention décrit ci-dessus, les motifs qui définissent la structure à cristal photonique sont des trous d'air. L'invention concerne également le cas où les motifs sont faits d'un matériau d'indice différent de 1 rapporté dans des trous formés dans le cristal, par exemple le cas où du cristal liquide emplit les trous. Les motifs peuvent également être réalisés par des piliers. Ces piliers peuvent être, par exemple, de section carrée ou rectangulaire, mais toute autre forme de section est également possible.

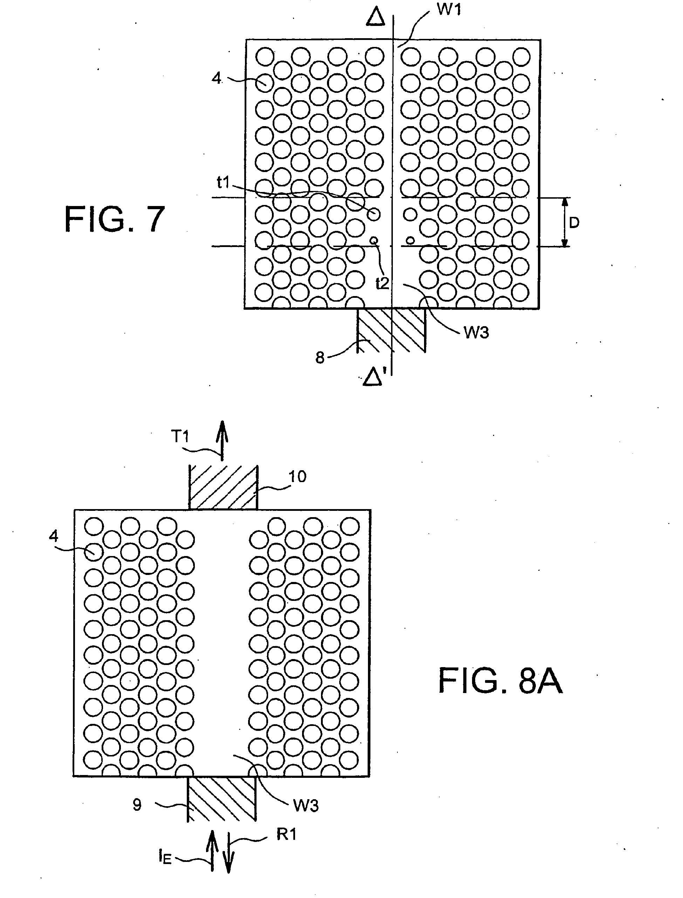

La figure 7 représente une première application d'un convertisseur de mode selon le premier exemple de l'invention. Le dispositif représenté en figure 7 est une transition entre un guide ruban 8 et un guide à cristal photonique.

Il est connu de l'homme de l'art que le guide W1 est un guide avantageux pour guider une onde optique dans une structure à cristal photonique. Comme cela va être montré ci-dessous, l'invention permet de réaliser simplement et avec d'excellentes performances un couplage entre un guide ruban et un guide à cristal photonique W1.

En effet, la transition directe entre un guide ruban et un guide à cristal photonique W3 est connue pour présenter de bonnes performances en transmission. Comme cela a été décrit ci-dessus, la conversion de mode à l'aide d'un convertisseur à cristal photonique W3/W1 selon l'invention présente également de bonnes performances. Il s'ensuit que la conversion de mode selon l'invention entre un guide ruban et un guide à cristal photonique W1 donne des résultats particulièrement avantageux.

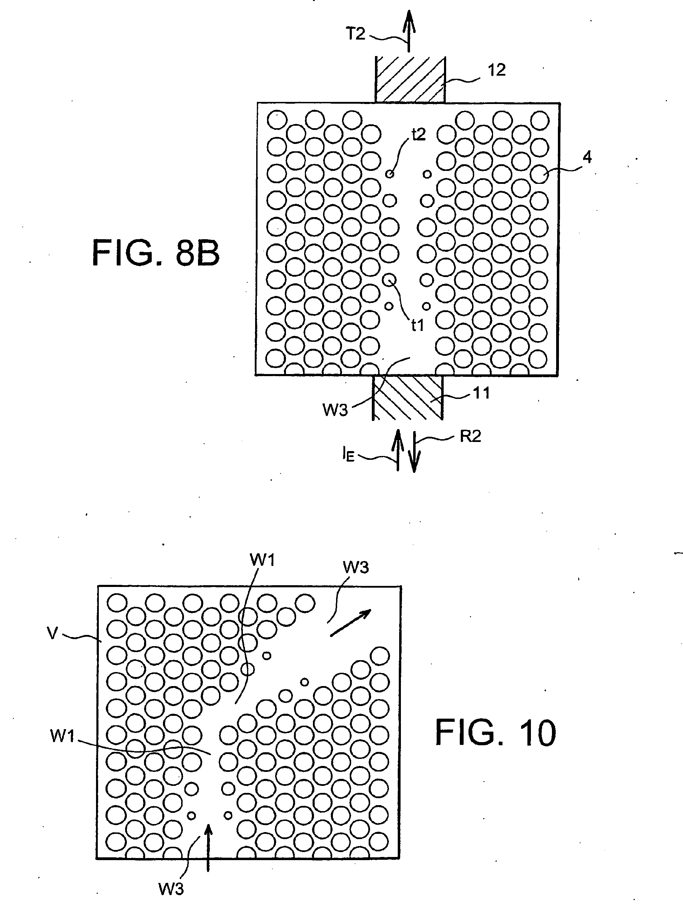

Les figures 8A et 8B représentent, à titre d'exemples, des circuits de principe permettant d'illustrer les performances d'un convertisseur de mode selon l'invention.

La figure 8A représente une structure de référence qui n'est pas une structure selon l'invention et qui est constituée, successivement, d'un premier guide ruban 9, d'un guide à cristal photonique W3 et d'un deuxième guide ruban 10.

La figure 8B représente une structure selon l'invention qui est constituée, successivement, d'un premier guide ruban 11, d'une structure à cristal photonique comprenant en série une transition W3/W1 et une transition W1/W3 et d'un deuxième guide ruban 12.

La largeur des rubans 9, 10, 11, 12 est par exemple choisie égale à 220 x $\sqrt{12}$ nm. Les références Ti et Ri (i = 1, 2) représentent, respectivement, les intensités transmises et réfléchies dans le mode fondamental $TE_{00}$ des guides ruban. $I_E$ représente l'intensité de l'onde incidente.

Le cristal photonique est supposé gravé dans un guide planaire composé d'un coeur d'indice 3,5, d'un substrat d'indice 3 et d'une couche supérieure d'indice 3,4 et d'épaisseur 330 nm. Les trous 4 du cristal photonique ont un diamètre de 130 nm, une profondeur de 900 nm et sont disposés sur une maille triangulaire de période 220 nm. Comme cela apparaît sur la figure 8B, deux trous t1 et t2 assurent, selon une rangée, la transition W1/W3 ou la transition W3/W1. Le trou t1 est, par exemple, de diamètre 88 nm et le trou t2, par exemple, de diamètre 44 nm. Un calcul a été effectué avec une théorie électromagnétique exacte à 3 dimensions. Sur l'ensemble de l'intervalle spectral correspondant à la bande interdite du cristal photonique (i.e. 0,75 $\mu$m < $\lambda$ < 0,98 $\mu$m), des valeurs moyennes pour T1, T2 et R1 respectivement égales à 83%, 96% et 1% ont été obtenues (les pourcentages sont ici calculés en référence à une intensité incidente $I_E$ de 100%).

Le circuit de la figure 8B comprend deux transitions. Il s'en suit que la valeur moyenne de couplage d'une seule transition ($\sqrt{T2 / T1}$) est égale à 93%. Cette valeur excellente par rapport à celle obtenue à l'aide d'une transition de l'art connu est avantageusement obtenue pour un couplage très court (typiquement 660 nm) et pour une large plage spectrale ($\Delta\lambda/\lambda$ > 25%).

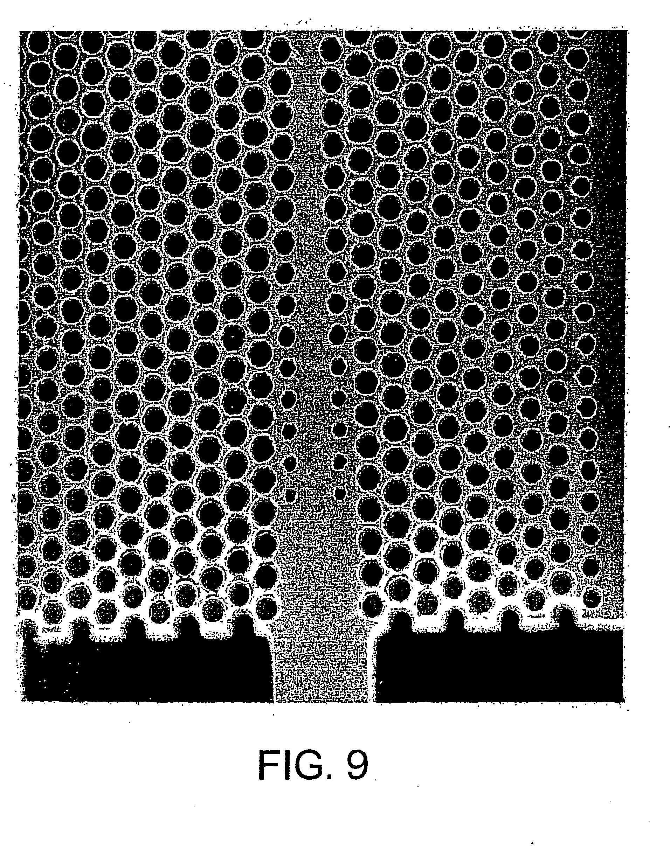

La figure 9 représente la photographie d'un convertisseur de mode W3/W1 (et réciproquement W1/W3) selon l'invention. La distance entre deux trous est typiquement égale à 450 nm.

Les mesures de réflexion de puissance réalisées sur ce convertisseur ont conduit à de très bons résultats. Les longueurs d'onde utilisées étaient comprises entre 1500 nm et 1590 nm, longueurs d'onde pour lesquelles le matériau semi-conducteur utilisé est transparent. Un coefficient de réflexion sur la puissance inférieur à 1% a été mesuré. A titre de comparaison, le coefficient de réflexion d'une transition W1/W3 dépourvue de diminution progressive du diamètre des trous (cas où les deux rangées de trous qui définissent le guide W1 s'interrompent brutalement) est sensiblement égal à 25%.

La figure 10 représente une deuxième application d'un convertisseur de mode selon le premier exemple de l'invention.

Le circuit représenté en figure 10 est un virage réalisé dans un guide à cristal photonique. Comme cela est connu de l'homme de l'art, toute perturbation qui apparaît le long d'un guide de propagation est source de désadaptation et conduit à une réflexion partielle de l'onde qui se propage. Il s'ensuit des pertes en transmission. De ce point de vue, un virage peut être considéré comme une perturbation. A courbure égale, il est connu qu'un virage dans un guide Wn présente moins de pertes qu'un virage dans un guide Wm, pour n < m. Le convertisseur de mode selon l'invention permet avantageusement de concevoir des structures dans lesquelles le guide de propagation est un guide Wm dans les parties droites et un guide Wn (n < m) dans les virages.

A titre d'exemple non limitatif, la figure 10 illustre une structure guidée à cristal photonique en forme de virage qui comprend une transition W3/W1, un virage en guide W1 et une transition W1/W3. Les performances de propagation s'en trouvent très avantageusement améliorées.

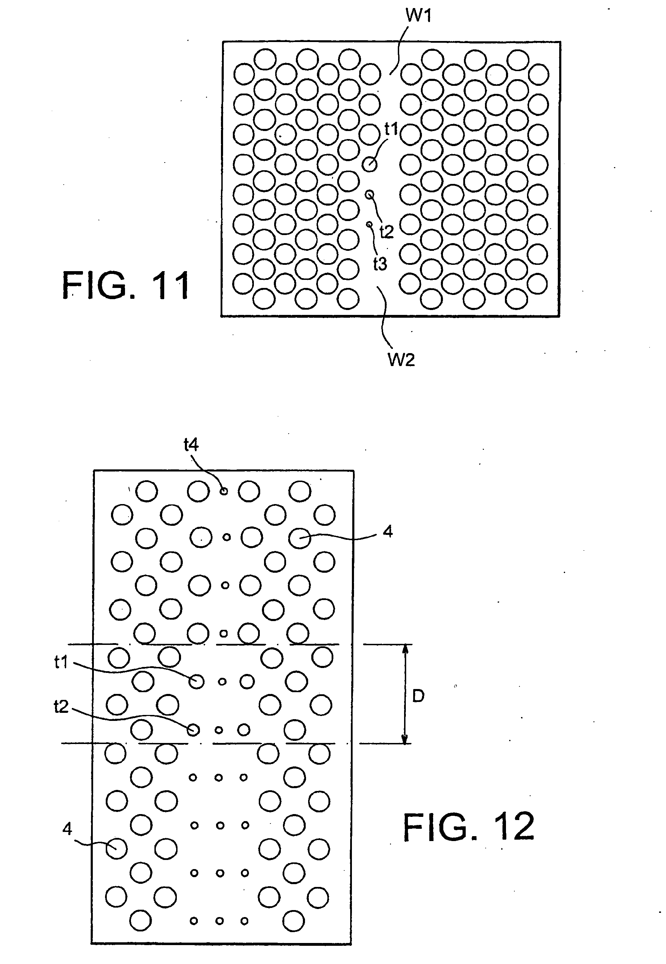

La figure 11 représente un deuxième exemple de convertisseur de mode selon l'invention. Le convertisseur de mode selon le deuxième exemple permet une transition entre un guide W1 et un guide W2. La partie de guide W2 est caractérisée par l'absence de deux rangées de trous dans la structure du cristal. La transition de la partie de guide W1 à la partie de guide W2 s'effectue par interruption, avec diminution de diamètre, des trous d'une des deux rangées qui définissent la partie de guide W1. Comme cela est représenté à titre d'exemple non limitatif sur la figure 9, trois trous t1, t2, t3 peuvent suffire à réaliser la transition. Pour un diamètre de trou de la structure à cristal photonique de 300 nm, les trois trous t1, t2, t3 peuvent avoir pour diamètres respectifs 200 nm, 100 nm, 50 nm. Selon ce deuxième exemple de convertisseur de mode, les parties de guide W1 et W2 ne sont pas alignées selon le même axe. Il a été constaté que ce désalignement n'était pas préjudiciable aux performances de la transition.

La figure 12 représente un troisième exemple de convertisseur de mode selon l'invention. Selon ce troisième exemple, le convertisseur de mode opère la transition entre un guide à cristal photonique de type W1 et un guide à cristal photonique de type W3. Par guide à cristal photonique de type W1 il faut entendre un guide W1 tel que défini ci-dessus dans lequel la partie centrale, au lieu d'être dépourvue de trous, est munie d'une rangée de trous t4 de petites dimensions par rapport aux trous principaux 4 de la structure. De même, par guide à cristal photonique de type W3, il faut entendre un guide W3 tel que défini ci-dessus dans lequel la partie centrale, au lieu d'âtre dépourvue de trous, est munie de trois rangées de trous de plus petites dimensions que les trous principaux 4, par exemple également des trous t4.

La transition entre un guide de type W1 et un guide de type W3 s'effectue par des trous dont le diamètre diminue. Deux trous t1 et t2 peuvent alors suffire pour assurer la transition entre une rangée de trous 4 du guide de type W1 et une rangée de trous t4 du guide de type W3. Un nombre de trous supérieur à deux peut également assurer la transition.

Les convertisseurs de mode selon l'invention sont avantageusement compatibles avec les guides de propagation basés sur le principe de la réflexion totale interne (cas où la lumière qui se propage dans un milieu à fort indice et qui arrive sur un milieu d'indice plus faible se trouve piégée par réflexion totale du fait du contraste d'indice).

Plus généralement, les convertisseurs de mode selon l'invention permettent de passer de tout guide à réflexion totale interne ou à cristal photonique à tout autre guide à réflexion totale interne ou à cristal photonique. Il est ainsi possible, par exemple, d'optimiser le couplage d'une structure donnée à une fibre optique ou d'associer plusieurs structures de guides d'onde différentes dans un même circuit intégré photonique, ce qui a pour conséquence de permettre une importante miniaturisation des circuits optiques et, partant, la possibilité d'intégrer de nombreuses fonctions optiques dans un très petit volume.

## Revendications

1. Structure de propagation guidée à cristal photonique, le cristal photonique comprenant des motifs principaux (4) formant les rangées d'un réseau périodique, le cristal photonique présentant :

> - un premier défaut (W1) correspondant à une première zone sans motifs principaux et formant une première portion de guide limitée par deux rangées desdits motifs principaux pour guider la lumière selon un premier mode de propagation ;
> **caractérisé en ce que** le cristal photonique présente :
> - un deuxième défaut (W3) correspondant à une deuxième zone sans motifs principaux, formant une deuxième portion de guide plus large que la première portion de guide, limitée par deux rangées desdits motifs principaux pour guider la lumière selon un deuxième mode de propagation différent du premier mode de propagation,
> - un troisième défaut formant une zone de transition comprise entre la première portion de guide et la deuxième portion de guide pour guider ta lumière entre la première portion de guide et la deuxième portion de guide, la zone de transition étant limitée par des motifs de transition (t1, t2), les motifs de transition étant alignés avec au moins une rangée desdits motifs principaux limitant la première portion de guide, les motifs de transition (t1, t2) diminuant de taille vers la deuxième portion de guide de sorte que la zone de transition forme un passage progressif entre la première portion de guide et la deuxième portion de guide.

2. Structure de propagation guidée selon la revendication 1, dans laquelle le réseau périodique est un réseau triangulaire dont la maille est sensiblement égale à 450nm.

3. Structure de propagation guidée selon l'une quelconque des revendications précédentes, dans laquelle les motifs principaux (4) et les motifs de transition (t1, t2) sont des trous.

4. Structure de propagation guidée selon la revendication précédente, dans laquelle les motifs principaux (4) limitant la première portion de guide et les motifs principaux (4) limitant la deuxième portion de guide sont des trous ayant un diamètre sensiblement égal à 300 nm.

5. Structure de propagation guidée selon la revendication précédente, dans laquelle les trous de la zone de transition qui sont alignés avec une rangée de trous de la première zone et qui diminuent de taille sont au nombre de deux (t1, t2) et ont pour diamètres respectifs 200 nm et 100 nm.

6. Structure de propagation guidée selon la revendication 4 ou 5, dans laquelle la zone de transition comprise entre la première portion de guide et la deuxième portion de guide s'étend sur une longueur sensiblement égale à 700nm.

7. Structure de propagation guidée selon l'une quelconque des revendications 3 à 6, dans laquelle les trous situés dans la zone de transition sont de moins en moins profonds pour passer de la première portion de guide d'onde à la deuxième portion de guide d'onde.

8. Structure de propagation guidée selon l'une quelconque des revendications 1 ou 2, dans lequel les motifs principaux et les motifs de transition sont des pièces en matériau d'indice différent de un rapportées dans des trous formés dans le cristal photonique.

9. Structure de propagation guidée selon l'une quelconque des revendications 1 ou 2, dans laquelle les motifs principaux (4) et les motifs de transition (t1, t2) sont des piliers.

10. Structure de propagation guidée selon la revendication précédente, dans laquelle les piliers sont de section carrée ou rectangulaire.

## Claims

1. A photonic crystal guided propagation structure, with the photonic crystal comprising main patterns (4) forming the rows of a periodic lattice, the photonic crystal having:

> - a first defect (W1) corresponding to a first zone without main patterns and forming a first guide portion limited by two rows of said main patterns for guiding the light according to a first propagation mode;

**characterised in that** the photonic crystal has:

- a second defect (W3) corresponding to a second zone without main patterns, forming a second guide portion wider than the first guide portion, limited by two rows of said main patterns for guiding the light according to a second propagation mode different from the first propagation mode,

- a third defect forming a transition zone comprised between the first guide portion and the second guide portion for guiding the light between the first guide portion and the second guide portion, the transition zone being limited by transition patterns (t1, t2), the transition patterns being aligned with at least one row of said main patterns limiting the first guide portion, the transition pattern (t1, t2) reducing in size towards the second guide portion so that the transition zone forms a progressive passage between the first guide portion and the second guide portion.

**2.** A guided propagation structure according to claim 1, in which the periodic lattice is a triangular lattice the period of which is substantially equal to 450 nm.

**3.** A guided propagation structure according to any one of the preceding claims, wherein the main patterns (4) and the transition patterns (t1, t2) are holes.

**4.** A guided propagation structure according to the preceding claim, wherein the main patterns (4) limiting the first guide portion and the main patterns (4) limiting the second guide portion are holes having a diameter substantially equal to 300 nm.

**5.** A guided propagation structure according to the preceding claim, wherein the holes in the transition zone which are aligned with a row of holes in the first zone and which are reduced in size are two in number (t1, t2) and have respective diameter of 200 nm and 100 nm.

**6.** A guided propagation structure according to claim 4 or 5, wherein the transition zone comprises between the first guide portion and the second guide portion extends on a length substantially equal to 700 nm.

**7.** A guided propagation structure according to any one of claims 3 to 6, wherein the holes located in the transition zone are less and less deep to pass from the first wave guide portion to the second wave guide portion.

**8.** A guided propagation structure according to any one of claims 1 or 2, wherein the main patterns and the transition patterns are parts made in a material having an index different from one and added in holes provided in the photonic crystal.

**9.** A guided propagation structure according to any one of claims 1 or 2, wherein the main patterns (4) and the transition patterns (t1, t2) are pillars.

**10.** A guided propagation structure according to the previous claim, wherein the pillars have a squared or rectangular section.

**Patentansprüche**

**1.** Geleitete Verbreitungsstruktur mit Photonkristall, wobei der Photonkristall Hauptmotive (4) umfasst, die die Reihen eines periodischen Netzes bildet, wobei der Photonkristall:

- einen ersten Fehler (W1) aufweist, der einer ersten Zone ohne Hauptmotive entspricht und einen ersten Leiterabschnitt bildet, der von zwei Reihen der genannten Hauptmotive begrenzt wird, um das Licht gemäß einer ersten Verbreitungsart zu leiten;

**dadurch gekennzeichnet, dass** der Photonkristall:

- einen zweiten Fehler (W3) aufweist, der einer zweiten Zone ohne Hauptmotive entspricht und einen zweiten Leiterabschnitt bildet, der breiter ist als der erste Leiterabschnitt und von zwei Reihen der genannten Hauptmotive begrenzt wird, um das Licht gemäß einer zweiten Verbreitungsart zu leiten, die sich von der ersten Verbreitungsart unterscheidet,

- einen dritten Fehler aufweist, der eine Übergangszone zwischen dem ersten Leiterabschnitt und dem zweiten Leiterabschnitt bildet, um das Licht zwischen dem ersten Leiterabschnitt und dem zweiten Leiterabschnitt zu leiten, wobei die Übergangszone von Übergangsmotiven (t1, t2) begrenzt ist, wobei die Übergangsmotive (t1, t2) mit mindestens einer Reihe der genannten Hauptmotive fluchten, die den ersten Leiterabschnitt begrenzen, wobei sich die Größe der Übergangsmotive (t1, t2) zum zweiten Leiterabschnitt hin verkleinert, so dass die Übergangszone einen progressiven Durchgang zwischen dem ersten Leiterabschnitt und dem zweiten Leiterabschnitt bildet.

**2.** Geleitete Verbreitungsstruktur gemäß Anspruch 1, bei der das periodische Netz ein dreieckiges Netz ist, deren Masche etwa 450nm beträgt.

**3.** Geleitete Verbreitungsstruktur gemäß einem der vorangehenden Ansprüche, bei der die Hauptmotive (4) und die Übergangsmotive (t1, t2) Löcher sind.

4. Geleitete Verbreitungsstruktur gemäß dem vorangehenden Anspruch, bei der die den ersten Leiterabschnitt begrenzenden Hauptmotive (4) und die den zweiten Leiterabschnitt begrenzenden Hauptmotive (4) Löcher sind, die einen Durchmesser von etwa 300 nm aufweisen.

5. Geleitete Verbreitungsstruktur gemäß dem vorangehenden Anspruch, bei der die Löcher der Übergangszone, die mit einer Lochreihe der ersten Zone fluchten und deren Größe sich verkleinert, zwei (t1, t2) sind und jeweils einen Durchmesser von 200 nm und 100 nm aufweisen.

6. Geleitete Verbreitungsstruktur gemäß Anspruch 4 oder 5, bei der sich die Übergangszone zwischen dem ersten Leiterabschnitt und dem zweiten Leiterabschnitt über eine Länge von etwa 700 nm erstreckt.

7. Geleitete Verbreitungsstruktur gemäß einem der Ansprüche 3 bis 6, bei der die in der Übergangszone angeordneten Löcher immer weniger tief sind, um vom ersten Wellenleiterabschnitt auf den zweiten Wellenleiterabschnitt überzugehen.

8. Geleitete Verbreitungsstruktur gemäß einem der Ansprüche 1 oder 2, bei der die Hauptmotive und die Übergangsmotive Teile sind aus einem Material mit einem anderen Index als Eins, die in die im Photonkristall gebildeten Löcher eingesetzt werden.

9. Geleitete Verbreitungsstruktur gemäß einem der Ansprüche 1 oder 2, bei der die Hauptmotive (4) und die Übergangsmotive (t1, t2) Pfeiler sind.

10. Geleitete Verbreitungsstruktur gemäß dem vorangehenden Anspruch, bei der die Pfeiler einen vier- oder rechteckigen Querschnitt aufweisen.

FIG. 1

FIG. 2

FIG. 3

FIG. 4

FIG. 5

FIG. 6

**FIG. 7**

**FIG. 8A**

FIG. 8B

FIG. 10

FIG. 9

W1

FIG. 11

t1

t2

t3

W2

t4

4

t1

t2

D

4

FIG. 12

## RÉFÉRENCES CITÉES DANS LA DESCRIPTION

**Littérature non-brevet citée dans la description**

- **ATTILA MEKIS ; J.D.JOANNOPOULOS.** Tapered Couplers for Efficient Interfacing Between Dielectric and Photonic Crystal Waveguides. *Journal of Lightwave Technology,* Juin 2001, vol. 19 (6

- **S.YAMADA et al.** Observation of light propagation in two-dimensional photonic crystal-based bent optical waveguides. *Journal of Applied Physics,* 15 Janvier 2001, vol. 89 (2
- **PALAMARU et al.** Photonic crystal waveguides : out-of-plane losses and adiabatic modal conversion. *Applied Physics Letters,* vol. 78 (11